# EUROPÄISCHE PATENTSCHRIFT

(11) **EP 1 252 779 B1**
(45) Veröffentlichungstag und Bekanntmachung des Hinweises auf die Patenterteilung: **21.02.2007**
(21) Anmeldenummer: 01909447.3
(22) Anmeldetag: 11.01.2001
(51) Int. Cl.: H04Q 7/22

(54) **Verfahren und Vorrichtung zum verwalten von Mobilfunknachrichten**
Method and device for managing mobile telephone messages
Procédé et dispositif pour gérer des messages dans le domaine de la radiotéléphonie mobile

(30) Priorität: 19.01.2000 DE 10002030
(43) Veröffentlichungstag der Anmeldung: 30.10.2002
(73) Patentinhaber: ROBERT BOSCH GMBH, 70442 Stuttgart (DE)
(72) Erfinder: KYNAST, Andreas, 31139 Hildesheim (DE); PLUMEIER, Joerg, 38229 Salzgitter (DE)
(86) Internationale Anmeldenummer: PCT/DE2001/000077
(87) Internationale Veröffentlichungsnummer: WO 2001/054436

(56) Entgegenhaltungen:
- EP-A- 0 752 793
- EP-A- 0 982 959
- WO-A-99/13667
- WO-A-99/51048
- WO-A-99/57927

## Beschreibung

### Stand der Technik

Die Erfindung geht aus von der Gattung, wie sie im unabhängigen Patentanspruch 1 wiedergegeben ist.

Aus der WO 99/57927 A ist ein Verfahren zum Verwalten von Mobilfunknachrichten bekannt, die zu einem Endgerät übertragen werden, wobei die Nachrichten mit Referenzinformationen verknüpft werden und die Referenzinformationen im Endgerät nach Gültigkeitskriterien geprüft werden, sowie dass die Nachrichten bei Gültigkeit in einem nichtflüchtigen Speicher gespeichert werden.

In Mobilfunk-Endgeräten werden Chipkarten als Subscriber Identity Module (SIM) eingesetzt. Das Chipkarten-Modul übernimmt neben der Identifizierung und Authorisierung des Netzteilnehmers u. a. auch die Rolle eines portablen Datenspeichers z. B. für Rufnummern oder für Kurznachrichten in Textform. Diese Kurznachrichten werden mit dem sog. Short Message Service (SMS) übertragen und können bis zu 160 Zeichen umfassen.

Als Alternative können die Kurznachrichten auch im Endgerät abgespeichert sein, dann geht allerdings der Vorteil verloren, sie zusammen mit dem Chipkarten-Modul in verschiedenen Endgeräten einsetzen zu können.

Da der nichtflüchtige Speicherplatz auf dem Chipkarten-Modul begrenzt ist (< 16 ... 32 kByte) und diverse weitere Daten und Funktionen in diesem Speicher abgelegt sind, ist die Anzahl der auf dem Chipkarten-Modul abspeicherbaren Kurznachrichten beschränkt. Sie liegt üblicherweise im Bereich von ca. 10 bis 20 Stück. Für das Endgerät gibt es zwar im Gegensatz zum Chipkarten-Modul keine technologisch bedingten Obergrenzen für die Speichergröße, allerdings wird auch hier die wirtschaftliche Auslegung der Ressourcen des Endgerätes zu einer Begrenzung der Speichergröße für die Kurznachrichten führen. Bei vollständig belegtem Speicher muss der Benutzer sowohl auf dem Chipkarten-Modul als auch im Endgerät manuell die nicht mehr benötigten Kurznachrichten löschen. Dazu ist meist ein aufwendiger Bedienablauf nötig.

Seit einiger Zeit werden insbesondere über SMS sogenannte Mehrwertdienste (Value Added Services) angeboten, wie z. B. Verkehrs- und Reiseinformationen oder Mobile Banking (Kontoauszug). In Zusammenhang mit solchen Diensten wird sich die Anzahl empfangener Kurznachrichten in Zukunft deutlich erhöhen und somit eine erhöhte Benutzeraktion zum Löschen der Kurznachrichten erforderlich machen.

Da zum Empfang einer Kurznachricht keine Benutzeraktion nötig ist, kann der Speicher auch gefüllt werden, ohne daß der Benutzer dies zunächst bemerkt. Da zudem bei vollständig belegtem Speicher keine weitere Nachricht empfangen werden kann, können dem Benutzer also auch durchaus gewünschte Kurznachrichten entgehen.

### Vorteile der Erfindung

Die Erfindung ermöglicht es, die im Endgerät oder Chipkarten-Modul gespeicherten Nachrichten automatisiert zu verwalten und so den Benutzer weitgehend von der manuellen Verwaltung zu entlasten. Da Nachrichten, die vorgegebene Gültigkeitskriterien nicht erfüllen, gelöscht oder gar nicht erst gespeichert werden, wird eine unkontrollierte Vollbelegung des nichtflüchtigen Speichers vermieden, so daß dem Benutzer keine neu eintreffenden Nachrichten wegen vollen Speichers entgehen werden. Das Löschen von Nachrichten kann auch dazu dienen, um eine bessere Übersichtlichkeit der zu betrachtenden Nachrichten zu erreichen.

Ergänzend kann die Verwaltung der Nachrichten auch eine Sortierung einbeziehen, wodurch sich die Nachrichten auch nach Sortierkriterien, z. B. nach Priorität speichern und/oder anzeigen lassen und damit für den Benutzer leichter erfaßbar werden. Die wichtigste oder neuste Nachricht kann an oberster Position im Anzeigefeld dargestellt werden.

Als Referenzinformation sowie als Gültigkeitskriterien und/oder Sortierkriterien können zeitliche Angaben, räumliche Angaben, Angaben über die Quelle, den Inhalt oder die Wichtigkeit der Nachricht dienen. Dadurch ist eine sehr intelligente und komfortable Verwaltung der Nachrichten möglich, die sich auch persönlichen Wünschen anpassen läßt und dann spätere manuelle Eingriff in die Verwaltung weitgehend unnötig macht.

So kann es allgemeine und persönliche Prioritäten zur Verwaltung der Nachrichten geben. Zu den allgemeinen Prioritäten kann z. B. die Wichtigkeit bei Verkehrsinformationen gehören. Gefahrenmeldungen, z. B. "Vorsicht Falschfahrer", haben eine höhere Priorität als Warnmeldungen, z. B. "Nebelbildung". Die persönlichen Prioritäten können sich aus persönlichen Vorlieben des Benutzers bilden. So sind z. B. für einen Benutzer Sportmeldungen wichtiger als Börsenmeldungen und für einen anderen Benutzer ist es umgekehrt.

Die Verwaltung der Nachrichten im Endgerät kann vom Endgerät selbst, vom Chipkarten-Modul oder sogar ferngesteuert über das Mobilfunknetz erfolgen. Letztere Alternative bietet sich besonders für allgemeine Prioritäten an. So kann z. B. während Großereignissen die Priorität für Verkehrshinweise in dieser Region erhöht werden.

Vorteilhafte Weiterbildungen der Erfindung sind in den abhängigen Ansprüchen angegeben.

### Zeichnungen

Ein Ausführungsbeispiel der Erfindung ist in der Zeichnung dargestellt und in der nachfolgenden Beschreibung näher erläutert. In der beigefügten Zeichnung zeigen
Figur 1 eine schematische Darstellung eines Mobilfunk-Endgerätes mit Funktionsblöcken und
Figur 2 ein Ablaufdiagramm der Verwaltung.

### Beschreibung des Ausführungsbeispiels

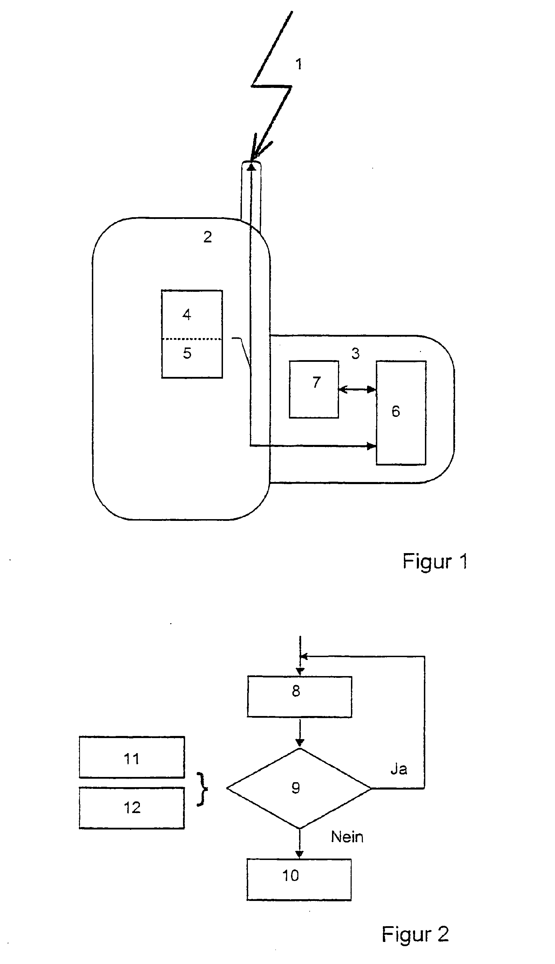

Figur 1 zeigt ein Mobilfunk-Endgerät 2, das in ein Mobilfunknetzwerk 1 eingebucht ist und eine Kurznachricht 4 erhält. In einer Halterung des Mobilfunk-Endgerätes 2 steckt ein Chipkarten-Modul 3, das einen nichtflüchtigen Speicher 6 umfaßt. Dieser nichtflüchtige Speicher 6 ist zur Speicherung von Kurznachrichten geeignet.

Die Kurznachricht 4 wird bei dem Ausführungsbeispiel nicht generell im nichtflüchtigen Speicher 6 abgelegt, sondern nur nach einer bestandenen Prüfung ihrer Gültigkeit. Um diese Prüfung zu ermöglichen, wird als Bestandteil der Kurznachricht oder als Zusatz dazu eine Referenzinformation 5 übertragen. Eine Verarbeitungseinheit 7 interpretiert und prüft diese Referenzinformation 5 anhand eines Gültigkeitskriteriums. Wird das Gültigkeitskriterium erfüllt, dann wird die Kurznachricht 4 mit der Referenzinformation 5 im nichtflüchtigen Speicher 6 abgelegt. Es kann auch vorgesehen sein, daß in zeitlichen Abständen oder bei Eintritt von Ereignissen zuvor gespeicherte Kurznachrichten 4 geprüft werden. Wird das Gültigkeitskriterium dann nicht erfüllt, wird die betroffene Kurznachricht 4 automatisch aus dem nichtflüchtigen Speicher 6 entfernt.

Figur 2 zeigt ein Ablaufdiagramm der Verwaltung. Eine zeitliche Vorgabe oder der Eintritt eines Ereignisses bewirkt einen Prüftrigger 8, der eine Gültigkeitsprüfung 9 der eintreffenden oder gespeicherten Kurznachricht auslöst. Dabei wird eine Referenzinformation 11, die Bestandteil der Kurznachricht ist, mit einem Gültigkeitskriterium 12 verglichen. Wird das Gültigkeitskriterium 12 erfüllt, dann ist die Kurznachricht gültig, wird gespeichert und später wieder erneut überprüft, wenn der Prüftrigger 8 aktiviert wird. Wird das Gültigkeitskriterium 12 nicht erfüllt, dann ist die Kurznachricht ungültig und wird nicht gespeichert oder im Fall einer zuvor erfolgten Speicherung aus dem Speicher 10 gelöscht. Neben einem Gültigkeitskriterium 12 kann auch ein Sortierkriterium vorgesehen sein, das eine Zuordnung zu Speicherplätzen oder Positionen auf einem Anzeigefeld steuert.

Das Gültigkeits-/Sortierkriterium kann beispielsweise ein zeitlicher Bezug, z. B. Zeitraum, Grenze, ein räumlicher Bezug, z. B. Vorwahl, Mobilfunkzelle, oder das Vorhandensein bzw. Nichtvorhandensein anderer Kurznachrichten im Speicher sein.

Der zeitliche Bezug kann an eine zeitliche Referenzinformation in der Kurznachricht geknüpft werden oder an den Empfangszeitpunkt der Kurznachrichten, z. B. "alle Kurznachrichten, die älter als eine Woche sind, automatisch löschen".

Der räumliche Bezug kann eine Mobilfunkzelle oder eine Liste von Mobilfunkzellen sein. Das Chipkarten-Modul kann dazu die Information, in welcher Zelle sich das Endgerät befindet vom Endgerät abfragen. Der räumliche Bezug kann aber auch eine Vorwahlnummer der entsprechenden Festnetzregion sein, z. B. 05121 für Hildesheim, eine Liste von Vorwahlnummern oder eine Gruppe von Vorwahlnummern (z. B. 05* für alle Vorwahlnummern, die mit 05 beginnen). Weitere Angaben wie Städte, Regionen, z. B. Harz, Weserbergland, oder Bundesländer sind bei entsprechender Umsetzung im Endgerät oder Chipkarten-Modul ebenfalls denkbar, aber aufwendiger.

Die Überprüfung der Kriterien kann ebenfalls zeitlich getriggert, "alle zwei Stunden", räumlich getriggert, "bei jedem Zellenwechsel", ereignisgetriggert, "wenn der Speicher voll ist und eine neue Kurznachricht empfangen wird" oder eine Kombination daraus sein. Auch eine automatisierte Gültigkeitsüberprüfung aller Kurznachrichten durch eine Benutzeraktion, "alle ungültigen Kurznachrichten löschen" ist denkbar.

Die Gültigkeitsprüfung/Sortierung kann direkt in der Einheit, nämlich dem Endgerät oder dem Chipkarten-Modul, stattfinden, in der die Kurznachrichten gespeichert sind. Sie kann allerdings auch vom Endgerät für das Chipkarten-Modul oder vom Chipkarten-Modul für das Endgerät durchgeführt werden. Auch eine Auslösung der Gültigkeitsüberprüfung bzw. das gezielte Löschen einer Gruppe von Kurznachrichten über das Mobilfunknetzwerk ist denkbar.

## Patentansprüche

1. Verfahren zum Verwalten von Mobilfunk-Nachrichten, insbesondere Kurznachrichten (SM); welche zu einem Endgerät übertragen werden,
wobei die Nachrichten mit Referenzinformationen verknüpft werden,
wobei die Referenzinformationen im Endgerät nach Gültigkeitskriterien geprüft werden und wobei die Nachrichten bei Gültigkeit in einem nichtflüchtigen Speicher gespeichert werden, **dadurch gekennzeichnet, dass** die Nachrichten bei sofort offenbarer Ungültigkeit nicht gespeichert werden oder zunächst gespeichert und gleich wieder gelöscht werden, und dass die Nachrichten nach vorangegangener Speicherung bei späterer Ungültigkeit aus dem nichtflüchtigen Speicher gelöscht werden.

2. Verfahren nach Anspruch 1, **dadurch gekennzeichnet, dass** die Referenzinformationen, mit denen die Nachrichten verknüpft werden, im Endgerät nach Sortierkriterien geprüft werden und die Nachrichten nach den Sortierkriterien Speicherplätzen in einem nichtflüchtigen Speicher zugewiesen oder daraus gelöscht werden und/oder Positionen im Anzeigefeld des Endgerätes zugewiesen oder daraus gelöscht werden.

3. Verfahren nach einem der Ansprüche 1 oder 2, **dadurch gekennzeichnet, dass** als Referenzinformation wenigstens eine der nachfolgenden Informationen oder eine Kombination davon verwendet werden: eine zeitliche Information, wie Zeitpunkt der Erzeugung, der Aussendung, des Empfangs oder ein unabhängig vorgebbarer Zeitpunkt oder Zeitraum, eine räumliche Information, wie Staat, Region, Ort, als Ursprung der Nachricht, eine Information über die Quelle der Nachricht, eine Information über den Inhalt der Nachricht, eine Information über den Grad der Wichtigkeit, und dass als Gültigkeitskriterien und/oder Sortierkriterien wenigstens eine der nachfolgenden Informationen oder eine Kombination davon ausgewertet werden: ein zeitliches Kriterium, wie ein Zeitraum oder eine Zeitgrenze, ein räumliches Kriterium, wie Staat, Region, Ort, als Klartext, Kürzel, Vorwahlnummer, oder Kennung einer Mobilfunkzelle, ein Quellenkriterium als Name, Adresse oder Telefonnummer, ein Inhaltskriterium als Vorhandensein oder Nicht-Vorhandensein vorgebbarer Zeichen, Zahlenfolgen oder Wörter, ein Wichtigkeitskriterium.

4. Verfahren nach einem der Ansprüche 1 bis 3, **dadurch gekennzeichnet, dass** die Prüfung nach Gültigkeitskriterien zeitlich getriggert, ereignisgetriggert, ferngesteuert über das Mobilfunknetz oder als Kombination davon vorgenommen wird.

5. Verfahren nach einem der Ansprüche 1 bis 4, **dadurch gekennzeichnet, dass** die Prüfung durch das Endgerät und/oder durch ein Chipkarten-Modul (SIM) durchgeführt wird.

6. Verfahren nach einem der Ansprüche 1 bis 5, **dadurch gekennzeichnet, dass** die Speicherung in nichtflüchtigen Speichern des Endgerätes und/oder des Chipkarten-Moduls (SIM) vorgenommen wird.

7. Vorrichtung zum Verwalten von Mobilfunk-Nachrichten (4), insbesondere Kurznachrichten (SM), welche zu einem Endgerät (2) mit einem nichtflüchtigen Speicher (6) übertragen werden, wobei in einer Verarbeitungseinheit (7) im Endgerät (2) ein Prüfprogramm ablaufbar ist, welches die mit Referenzinformationen (5) verknüpften Nachrichten (4) nach Gültigkeitskriterien prüft und die Nachrichten (4) bei Gültigkeit im nichtflüchtigen Speicher (6) speichert, **dadurch gekennzeichnet, dass** das Prüfprogramm die Nachrichten bei sofort offenbarer Ungültigkeit nicht speichert oder zunächst speichert und gleich wieder löscht und die Nachrichten nach vorangegangener Speicherung bei späterer Ungültigkeit aus dem nichtflüchtigen Speicher (6) löscht.

8. Vorrichtung nach Anspruch 7, **dadurch gekennzeichnet, dass** die Verarbeitungseinheit (7) Bestandteil des Endgerätes (2) oder des Chipkarten-Moduls (SIM) (3) ist.

9. Vorrichtung nach Anspruch 7 oder 8, **dadurch gekennzeichnet**, der nichtflüchtige Speicher (6) Bestandteil des Endgerätes (2) oder des Chipkarten-Moduls (SIM) (3) ist.

## Claims

1. Method for managing mobile radio messages, particularly short messages (SM) which are transmitted to a terminal,
wherein the messages are linked to reference information,
wherein the reference information is checked for validity criteria in the terminal and wherein the messages, in the case of validity, are stored in a non-volatile memory, **characterized in that** the messages, if invalidity is immediately apparent, are not stored or are first stored and immediately deleted again, and that the messages, after they have first been stored, are deleted from the non-volatile memory in the case of later invalidity.

2. Method according to Claim 1, **characterized in that** the reference information with which the messages are linked is checked in accordance with sorting criteria in the terminal and the messages are assigned to or deleted from storage spaces in a non-volatile memory, and/or assigned to or deleted from positions in the display panel of the terminal, in accordance with the sorting criteria.

3. Method according to one of Claims 1 or 2,
**characterized in that**, as the reference information, at least one of the following information items or a combination thereof are used: a time information such as the time of generation, of sending out, of reception or an independently predeterminable time or period, a spatial information item such as state, region, location as origin of the message, an information item about the source of the message, an information item about the content of the message, an information item about the degree of importance, and that, as validity criteria and/or sorting criteria, at least one of the following information items or a combination thereof are evaluated: a time criterion such as a period or a time limit, a spatial criterion such as state, region, location, as plain text, abbreviation, dialling code number or identification of a mobile radio cell, a source criterion as name, address or telephone number, a content criterion as existence or non-existence of predeterminable characters, character sequences or words, an importance criterion.

4. Method according to one of Claims 1 to 3, **characterized in that** the check for validity criteria is performed triggered by time, triggered by event, remote controlled via the mobile radio network or as a combination thereof.

5. Method according to one of Claims 1 to 4, **characterized in that** the check is performed by the terminal and/or by a chip card module (SIM).

6. Method according to one of Claims 1 to 5, **characterized in that** the storing is performed in non-volatile memories of the terminal and/or of the chip card module (SIM).

7. Device for managing mobile radio messages (4), particularly short messages (SM) which are transmitted to a terminal (2) with a non-volatile memory (6), wherein, in a processing unit (7) in the terminal (2), a test programme can be run which checks the messages (4) linked to reference information (5) for validity criteria and, in the case of validity, stores the messages (4) in the non-volatile memory (6), **characterized in that** the test programme does not store, or first stores and immediately deletes again the messages if invalidity is immediately apparent, and, after they have first been stored, deletes the messages from the non-volatile memory (6) in the case of later invalidity.

8. Device according to Claim 7, **characterized in that** the processing unit (7) is a component of the terminal (2) or of the chip card module (SIM) (3).

9. Device according to Claim 7 or 8, **characterized in that** the non-volatile memory (6) is a component of the terminal (2) or of the chip card module (SIM) (3).

## Revendications

1. Procédé pour gérer des messages de téléphonie mobile, en particulier des messages courts (SM) transmis à un terminal,
selon lequel on associe les messages à des informations de référence, on teste les informations de référence dans le terminal selon des critères de validité, on enregistre les messages en cas de validité, dans une mémoire non volatile,
**caractérisé en ce qu'**
on n'enregistre pas les messages en cas d'invalidité immédiatement apparente, ou on les enregistre d'abord puis on les efface aussitôt, et
on efface les messages de la mémoire non volatile en cas d'invalidité ultérieure après les avoir enregistrés.

2. Procédé selon la revendication 1,
**caractérisé en ce que**
les informations de référence, auxquelles les messages sont associés, sont vérifiées dans le terminal selon des critères de classement et les messages sont affectés, en fonction des critères de classement, à des emplacements de mémoire dans une mémoire non volatile ou en sont effacés, et/ou affectés à des positions dans le champ d'affichage du terminal ou en sont effacés.

3. Procédé selon l'une quelconque des revendications 1 ou 2,
**caractérisé en ce qu'**
on utilise au moins l'une des informations suivantes ou une combinaison de celles-ci en tant qu'information de référence : une information temporelle comme l'instant de la production, l'émission, la réception ou un instant ou une période pouvant être prédéfini(e) de manière indépendante, une information géographique comme, l'état, la région, le lieu, en tant qu'origine du message, une information sur la source du message, une information sur le contenu du message, une information sur le degré d'importance, et
on analyse, en tant que critères de validité et/ou critères de classement, au moins l'une des informations suivantes ou une combinaison de celles-ci : un critère de temps, comme une période ou une limite de temps, un critère géographique tel que l'état, la région, le lieu, sous forme de texte en clair, d'abréviation, d'indicatif téléphonique, ou d'identification d'une cellule de téléphonie mobile, un critère de source sous forme de nom, d'adresse ou de numéro de téléphone, un critère de contenu sous forme de présence ou d'absence de signes, suites de chiffres ou de mots pouvant être prédéfinis, un critère d'importance.

4. Procédé selon l'une quelconque des revendications 1 à 3,
**caractérisé en ce que**
la vérification d'après des critères de validité est déclenchée dans le temps, en fonction d'un évènement, télécommandée via le réseau de téléphonie mobile ou effectuée sous forme de combinaison de ceci.

5. Procédé selon l'une quelconque des revendications 1 à 4,
**caractérisé en ce que**
la vérification est réalisée par le terminal et/ou par un module à cartes puce (SIM).

6. Procédé selon l'une quelconque des revendications 1 à 5,
**caractérisé en ce que**
l'enregistrement est effectué dans des mémoires non volatiles du terminal et/ou du module à cartes à puce (SIM).

7. Dispositif pour gérer des messages de téléphonie mobile (4), en particulier des messages courts (SM) transmis à un terminal (2) comportant une mémoire non volatile (6),
dans lequel un programme de vérification peut tourner dans une unité de traitement (7) du terminal (2), programme qui vérifie les critères de validité des messages (4) associés à des informations de référence (4) et enregistre les messages (4) dans la mémoire non volatile (6) en cas de validité,
**caractérisé en ce que**
le programme de vérification n'enregistre pas les messages en cas d'invalidité immédiatement apparente, ou les enregistre d'abord et les supprime ensuite aussitôt, et efface de la mémoire non volatile (6) les messages en cas d'invalidité ultérieure après les avoir enregistrés.

8. Dispositif selon la revendication 7,
**caractérisé en ce que**
l'unité de traitement (7) est un composant du terminal (2) ou du module à cartes à puce (SIM) (3).

9. Dispositif selon la revendication 7 ou 8,
**caractérisé en ce que**
la mémoire non volatile (6) est un composant du terminal (2) ou du module à cartes à puce (SIM) (3).
